# EUROPÄISCHE PATENTSCHRIFT

(11) **EP 3 692 389 B1**
(45) Veröffentlichungstag und Bekanntmachung des Hinweises auf die Patenterteilung: **18.01.2023**
(21) Anmeldenummer: 18786660.3
(22) Anmeldetag: 08.10.2018
(51) Int. Cl.: G01S 7/40

(54) **VORRICHTUNG UND VERFAHREN ZUR KONVERTIERUNG EINES RADARSIGNALS, SOWIE PRÜFSTAND**
DEVICE AND METHOD FOR CONVERTING A RADAR SIGNAL, AND TEST BENCH
DISPOSITIF ET PROCÉDÉ DE CONVERSION D'UN SIGNAL RADAR, AINSI QUE BANC D'ESSAI

(30) Priorität: 06.10.2017 AT 508572017
(43) Veröffentlichungstag der Anmeldung: 12.08.2020
(73) Patentinhaber: AVL List GmbH, 8020 Graz (AT)
(72) Erfinder: GADRINGER, Michael Ernst, 8042 Graz (AT); VORDERDERFLER, Michael, 8010 Graz (AT); GRUBER, Andreas, 8053 Graz (AT); SCHREIBER, Helmut, 8010 Graz (AT)
(74) Vertreter: Hahner, Ralph
(86) Internationale Anmeldenummer: PCT/AT2018/060236
(87) Internationale Veröffentlichungsnummer: WO 2019/068125

(56) Entgegenhaltungen:
- US-A- 5 892 479
- US-A1- 2004 012 517
- US-A1- 2009 309 783
- US-B1- 6 346 909
- MICHAEL VORDERDERFLER ET AL: "Frequenzteiler und ihre Anwendung in Radar-Target-Stimulatoren", ELEKTROTECHNIK UND INFORMATIONSTECHNIK., Bd. 135, Nr. 4-5, 27. Juni 2018 (2018-06-27), Seiten 344-351, XP055534490, AT ISSN: 0932-383X, DOI: 10.1007/s00502-018-0626-3

## Beschreibung

Die vorliegende Erfindung betrifft eine Vorrichtung und ein Verfahren zum Konvertieren eines Radarsignals zur weiteren Signalverarbeitung in einem Prüfstand mit einem Radarzielemulator sowie einen Prüfstand mit einer solchen Vorrichtung.

Die Komplexität mobiler Systeme, insbesondere von landgebundenen Kraftfahrzeugen, wie zum Beispiel Personenkraftwagen, Lastkraftwagen oder Motorkrafträdern, nimmt seit Jahren kontinuierlich zu. Dies erfolgt neben der Reduzierung von Emissionen und/oder Kraftstoffverbrauch oder der Erhöhung des Fahrkomforts unter anderem auch zur Bewältigung des gerade in Ballungsräumen stetig zunehmenden Verkehrsaufkommens. Hierfür sind in der Regel Fahrerassistenzsysteme bzw. Assistenzsysteme zuständig, welche über fahrzeuginterne Sensoren und/oder über Kommunikation mit anderen Fahrzeugen und/oder stationären Stellen bzw. Diensten Informationen über die Fahrzeugumgebung, insbesondere und die voraussichtliche Route, dazu nutzen, den Fahrer in Standardfahrsituationen und/oder Extremsituationen in Form von Hinweisen zu unterstützen und/oder aktiv in das Fahrzeugverhalten einzugreifen.

Häufig werden zumindest als Bestandteil der oben genannten Sensorik Radarsensoren eingesetzt, welche das unmittelbare Umfeld des Fahrzeugs bezüglich Hindernissen und/oder vorausfahrenden Fahrzeugen oder dergleichen überwachen. Zur Evaluierung solcher Assistenzsysteme ist es bekannt, diesen Informationen über ein, insbesondere virtuelles, Test-Szenario zuzuführen und die Reaktion des Assistenzsystems auszuwerten.

Um ein, möglicherweise hochfrequentes, Radarsignal des Radarsensors im Hinblick auf das Test-Szenario verarbeiten zu können, ist üblicherweise eine Frequenzumsetzung des Signals in einen tieferen Frequenzbereich notwendig ("downconversion"), was beispielsweise durch Mischen des Signals an einer Mischerstufe unter Verwendung eines lokalen Oszillators realisiert wird:
Das Dokument US 8 248 297 B1 betrifft ein System zur Anordnung zwischen einem Radarsender eines Radar-Umgebungssimulators und einem an eine Radarzielanzeige gekoppelten Radarempfänger. Das System weist einen Leistungsteiler zur Teilung eines Eingangs-Radarsignals, einen lokalen Oszillator und zwei Mischer, die jeweils in einem Pfad einer Signalkomponente vom Leistungsteiler angeordnet sind, auf.

Das Dokument US 3 903 521 betrifft eine Vorrichtung zur Erzeugung eines Testsignals, wobei zwei Eingangssignale aufgenommen und für ein Radarsystem synchronisiert werden. Bei der Bearbeitung eines Signals mit einem typischen Arbeitstakt von 8280 pro Sekunde in einem Beschleunigung-Sägezahngenerator wird der Arbeitstakt von einem Frequenzteiler des Beschleunigung-Sägezahngenerators um einen Faktor zwei geteilt. Dieses Signal wird bei der weiteren Bearbeitung begrenzt und einem Frequenzumwandler zugeführt, dessen Aufgabe die Übersetzung der Frequenz des Signals in einen Frequenzbereich ist, der dem Frequenzbereich an einem Aufnahmepunkt typischer Radarsysteme entspricht.

Das Dokument CN 105 510 980 A betrifft einen Radarecho-Simulator, welcher eine zweistufige Frequenzumwandlung eines Radarsignals eines in einem Fahrzeug vorgesehenen Antikollisionsradars von Millimeterwellen in Zentimeterwellen mittels eines sog. "down conversion module" ausführt, so dass das Radarsignal von einem Signalprozessor analysiert und dabei gemäß einer Parametereingabe ein analoges Echosignal erzeugt werden kann.

Das Dokument US 2004/0012517 A1 betrifft ein Radartestsystem zum Testen der Leistung eines Automobilradarsystems und umfasst Schaltungen für mehrere Abwärts- und Aufwärtswandlungen eines Signals von dem Automobilradar. Weiterhin ist eine Konditionierungsschaltung enthalten, um ein Zwischenfrequenzsignal zu verzögern, das nach der zweiten Abwärtswandlung erhalten wird, um die Verzögerung eines Rücksignals von einem Objekt zu simulieren, das sich in einem bestimmten Abstand von dem Fahrzeugradarsystem befindet, und um das IF2-Signal zu dämpfen, um eine Zielgrößen-Variable zu simulieren und um eine Doppler-Verschiebung im IF2-Signal zu erzeugen, um die Zielgeschwindigkeit zu simulieren.

Es ist eine Aufgabe der vorliegenden Erfindung, eine Radarzielemulation zu verbessern, insbesondere ein breitbandiges Radarsignal im Wesentlichen ohne oder zumindest unter verringertem Qualitätsverlust zur Bearbeitung in einem Radarzielemulator zu komprimieren.

Diese Aufgabe wird im Sinne der vorliegenden Erfindung gelöst durch eine Vorrichtung und ein Verfahren gemäß den unabhängigen Ansprüchen sowie einem Prüfstand mit einer solchen Vorrichtung.

Die Erfindung betrifft eine Vorrichtung zum Konvertieren eines Radarsignals zur weiteren Signalverarbeitung, insbesondere in einem Prüfstand mit einem Radarzielemulator, welche eine Teileranordnung und eine Vervielfachungsanordnung aufweist. Die Teileranordnung weist vorzugsweise eine Teilereinrichtung auf, welche dazu eingerichtet ist, eine Frequenz und eine Bandbreite des Radarsignals um einen ersten Faktor zur weiteren Signalverarbeitung zu verringern. Die Vervielfachungsanordnung weist vorzugsweise eine Vervielfachungseinrichtung auf, welche dazu eingerichtet ist, eine Frequenz und eine Bandbreite des Radarsignals nach der weiteren Signalverarbeitung, insbesondere durch den Radarzielemulator, um den ersten Faktor zu erhöhen. Dies ist insbesondere vorteilhaft, da die Teilereinrichtung das Radarsignal ohne Mischung mit einer Signalkomponente eines lokalen Oszillators, der durch ein Phasenrauschen die Signalqualität des Radarsignals verschlechtern würde, zur weiteren Signalverarbeitung, insbesondere zur Verarbeitung in einem Radarzielemulator, umwandeln kann. Analog ist dies insbesondere vorteilhaft, da die Vervielfachungseinrichtung das Radarsignal nach der weiteren Signalverarbeitung, insbesondere nach der Verarbeitung im Radarzielemulator, ohne Mischung mit einer Signalkomponente eines lokalen Oszillators, insbesondere zur Übermittlung an einen Radarsensor, umwandeln kann.

Dabei werden innerhalb der Teileranordnung bzw. innerhalb der Vervielfachungsanordnung vorzugsweise sowohl Frequenz als auch Bandbreite im Wesentlichen gleichzeitig, d.h. im Rahmen einer einzigen am Radarsignal ausgeführten Signalverarbeitung, um den ersten Faktor verringert bzw. erhöht. Die Verringerung der Bandbreite des Radarsignals in der Teileranordnung durch die Teilereinrichtung erlaubt dabei eine Kompression des Radarsignals bzw. seines Signalspektrums, durch welche das Radarsignal ohne Verlust von Information gestaucht werden kann. In der Folge können Radarsignale mit einer hohen Bandbreite, etwa bei 4 GHz, derart komprimiert auch von Radarzielemulatoren mit geringerer Bandbreite, insbesondere digital, verarbeitet werden.

Die Verringerung der Frequenz und insbesondere der Bandbreite mittels der Teilereinrichtung und analog die Erhöhung der Frequenz und insbesondere der Bandbreite mittels der Vervielfachungseinrichtung wird im Sinne der Erfindung vorzugsweise im Wesentlichen analog oder zumindest teilweise analog ausgeführt. Zu diesem Zweck weist die Teilereinrichtung und/oder die Vervielfachungseinrichtung vorteilhaft jeweils eine analoge Schaltung auf oder wird von ihr gebildet. Dadurch kann das Signal verdichtet bzw. dekomprimiert werden, ohne dass durch digitale Verarbeitung, etwa durch diskretes Sampling, verursachte Artefakte oder zumindest Informationsverluste auftreten.

Insgesamt erlaubt es die Erfindung, eine Radarzielemulation zu verbessern, insbesondere ein breitbandiges Radarsignal im Wesentlichen ohne oder zumindest unter verringertem Qualitätsverlust zur Bearbeitung in einem Radarzielemulator zu komprimieren.

Keine der aus dem Stand der Technik bekannten Vorrichtungen offenbart eine Teileranordnung mit einer Teilereinrichtung, um die Frequenz und die Bandbreite eines Radarsignals insbesondere gleichermaßen zur weiteren Signalverarbeitung um einen ersten Faktor zu verringern. Darüber hinaus offenbart auch keine der aus dem Stand der Technik bekannten Vorrichtungen, in einer Vervielfachungsanordnung eine Vervielfachungseinrichtung vorzusehen, welche die Frequenz und die Bandbreite des, insbesondere in einem Radarzielemulator, weiterverarbeiteten Radarsignals, dessen Frequenz und Bandbreite zuvor um den ersten Faktor verringert wurde, insbesondere gleichermaßen wieder um den ersten Faktor zu erhöhen.

Ein "Prüfstand" im Sinne der vorliegenden Erfindung ist insbesondere eine Anordnung, durch die ein von einem Radarsensor ausgesendetes Radarsignal empfangbar und in der Weise modifizierbar ist, dass das modifizierte Radarsignal Information bezüglich eines Test-Szenarios, d.h. insbesondere Information bezüglich der Position und des Abstands von emulierten Objekten, enthält, und gegebenenfalls derart modifiziert wieder dem Radarsensor bereitgestellt werden kann. Die Information bezüglich des Test-Szenarios ist beispielsweise in der Amplitude und/oder der Phase des modifizierten Radarsignals enthalten. Ein Prüfstand kann somit beispielsweise dazu verwendet werden, ein Fahrerassistenzsystem eines Fahrzeugs zu prüfen, wobei das von einem Radarsensor des Fahrzeugs, der mit dem Fahrerassistenzsystem in Verbindung steht, den Prüfstand zugeführt, modifiziert und als modifiziertes Radarsignal an den Radarsensor zurückgegeben wird.

Eine "Teileranordnung" im Sinne der vorliegenden Erfindung ist insbesondere eine Anordnung von wenigstens einer analog und/oder digital ausgeführten signalverarbeitenden Komponente, insbesondere einer Teilereinrichtung. Mittels der wenigstens einen signalverarbeitenden Komponente kann ein an der Teileranordnung bereitgestelltes Eingangssignal mit einer Eingangsfrequenz, insbesondere in einem Arbeitsfrequenzbereich des Radarsensors, und einer Eingangsbandbreite in ein Arbeitssignal mit einer Arbeitsfrequenz und einer Arbeitsbandbreite umgewandelt, insbesondere an einen Radarzielemulator ausgegeben, werden. Dabei ist die Arbeitsfrequenz gegenüber der Eingangsfrequenz um einen Faktor verringert, und die Arbeitsbandbreite ist gegenüber der Eingangsbandbreite um den gleichen oder einen anderen Faktor verringert.

Eine "Vervielfachungsanordnung" im Sinne der vorliegenden Erfindung ist insbesondere eine Anordnung von wenigstens einer analog und/oder digital ausgeführten signalverarbeitenden Komponente, insbesondere einer Vervielfachungseinrichtung. Mittels der wenigstens einen signalverarbeitenden Komponente kann ein an der Vervielfachungsanordnung bereitgestelltes, insbesondere von einem Radarzielemulator modifiziertes, Arbeitssignal mit einer gegebenenfalls modifizierten Arbeitsfrequenz und einer gegebenenfalls modifizierten Arbeitsbandbreite in ein Ausgangssignal mit einer Ausgangsfrequenz und einer Ausgangsbandbreite umgewandelt, insbesondere an einen Radarsensor übermittelt, werden. Dabei ist die Ausgangsfrequenz gegenüber der gegebenenfalls modifizierten Arbeitsfrequenz um einen Faktor erhöht, und die Ausgangsbandbreite ist gegenüber der gegebenenfalls modifizierten Arbeitsbandbreite um den gleichen oder einen anderen Faktor erhöht.

Eine "Teilereinrichtung" im Sinne der vorliegenden Erfindung ist insbesondere dazu eingerichtet, an einem der Teilereinrichtung zugeführten Radarsignal im Frequenzraum eine Entfaltung ("deconvolution"), insbesondere in zwei gleiche entfaltete Radarsignale, auszuführen. Dies entspricht mathematisch dem Ziehen einer Wurzel aus dem Radarsignal im Zeitbereich, insbesondere dem Ziehen der Quadratwurzel. Dabei ergibt sich vorzugsweise eine Verschiebung der Frequenz des Radarsignals hin zu geringeren Frequenzen, und eine Verringerung der Bandbreite des Radarsignals.

Eine "Vervielfachungseinrichtung" im Sinne der vorliegenden Erfindung ist insbesondere dazu eingerichtet, an einem der Vervielfachungseinrichtung zugeführten Radarsignal im Frequenzraum eine Faltung, insbesondere mit sich selbst, auszuführen. Dies entspricht mathematisch einer Multiplikation des Radarsignals im Zeitbereich, insbesondere dem Quadrieren des Radarsignals. Daher wird die Vervielfachungseinrichtung auch als "Multiplizierer" bezeichnet. Dabei ergibt sich vorzugsweise eine Verschiebung der Frequenz des Radarsignals hin zu höheren Frequenzen, und eine Vergrößerung der Bandbreite des Radarsignals.

In einer bevorzugten Ausführungsform weist die Teilereinrichtung wenigstens einen, insbesondere regenerativen, Frequenzteiler auf, der vorzugsweise als elektronische, zumindest teilweise analoge, Schaltung ausgeführt und ferner vorzugsweise dazu eingerichtet ist, die Frequenz eines am Frequenzteiler anliegenden Radarsignals in einem vorgegebenen, vorzugsweise ganzzahligen oder rationalen, Teilungsverhältnis, welches insbesondere dem ersten Faktor entspricht, zu teilen. Der, insbesondere regenerative, Frequenzteiler wird gegebenenfalls auch als "Miller-Frequenzteiler" bezeichnet und ist in bevorzugter Weise dazu eingerichtet, ein am Frequenzteiler anliegendes Eingangssignal mittels einer Mischerkomponente mit einem, gegebenenfalls verstärkten, Rückkopplungssignal der Mischerkomponente zu mischen.

Die Bandbreite des durch den Frequenzteiler geteilten Radarsignals wird dabei analog zu Frequenz vorzugsweise in dem vorgegebenen, vorzugsweise ganzzahligen oder rationalen, Teilungsverhältnis geteilt, wobei das Teilungsverhältnis insbesondere dem ersten Faktor entspricht.

Dabei wird die Teilung der Frequenz und der Bandbreite des am Frequenzteiler anliegenden Radarsignals vorzugsweise im Frequenzraum ausgeführt, was dem Ziehen einer Wurzel im Zeit- bzw. Signalraum entspricht.

In einer weiteren bevorzugten Ausführungsform weist die Teileranordnung des Weiteren ein Teilermodul auf, welches dazu eingerichtet ist, eine Frequenz des Radarsignals, insbesondere des an der Teileranordnung anliegenden Eingangssignals oder des von der wenigstens einen Teilereinrichtung ausgegebenen Radarsignals, um einen zweiten Faktor zur weiteren Signalverarbeitung, insbesondere zur Bereitstellung an der wenigstens einen Teilereinrichtung bzw. am Radarzielemulator, zu verringern. Dabei weist die Vervielfachungsanordnung vorzugsweise ein Vervielfachungsmodul auf, welches dazu eingerichtet ist, eine Frequenz des Radarsignals nach der weiteren Signalverarbeitung, insbesondere des dem vom Radarzielemulator ausgegebenen, gegebenenfalls modifizierten Arbeitssignals, um den zweiten Faktor, insbesondere zur Bereitstellung an der wenigstens einen Vervielfachungseinrichtung oder zur Übermittlung an den Radarsensor, zu erhöhen.

Dadurch kann die Frequenz des Radarsignals, insbesondere des an der Teileranordnung anliegenden Eingangssignals, in einen Bereich, insbesondere bis unter einen vorgegebenen Frequenzgrenzwert, verschoben werden, in welchem die wenigstens eine Teilereinrichtung das Radarsignal verarbeiten, insbesondere dessen Frequenz und Bandbreite teilen, kann. Dabei wird die Frequenz des Radarsignals vorzugsweise auf unter 25 GHz, bevorzugt auf unter 15 GHz, insbesondere auf unter 10 GHz, gesenkt.

Des Weiteren kann dadurch die Frequenz des Radarsignals, vorzugsweise des von der wenigstens einen Vervielfachungseinrichtung verarbeiteten, gegebenenfalls modifizierten Arbeitssignals, an die Frequenz des ursprünglich an der Teileranordnung bereitgestellten Eingangssignals angepasst werden, so dass dem Radarsensor das Ausgangssignal der Vervielfachungsanordnung im Wesentlichen in einem Frequenzarbeitsbereich des Radarsensors übermittelt werden kann.

Ein "Frequenzarbeitsbereich" einer signalverarbeitende Komponente, etwa des Radarsensors, des Radarzielemulators, der Teiler- und/der der Vievielfachungseinrichtung, im Sinne der vorliegenden Erfindung ist insbesondere ein Frequenzbereich, in welchem die signalverarbeitende Komponente ein an ihr anliegendes bzw. von ihr aufgenommenes Signal zuverlässig und präzise, insbesondere fehler- und/oder artefaktfrei, verarbeiten kann. Mit anderen Worten entspricht ein Frequenzarbeitsbereich einer signalverarbeitende Komponente demjenigen Frequenzbereich, in dem die signalverarbeitende Komponente zum Betrieb vorgesehen ist.

Ein "Bandbreitenarbeitsbereich" einer signalverarbeitende Komponente, etwa des Radarsensors, des Radarzielemulators, der Teiler- und/der der Vievielfachungseinrichtung, im Sinne der vorliegenden Erfindung ist insbesondere ein Bandbreitenbereich, in welchem die signalverarbeitende Komponente ein an ihr anliegendes bzw. von ihr aufgenommenes Signal zuverlässig und präzise, insbesondere fehler- und/oder artefaktfrei, verarbeiten kann. Mit anderen Worten entspricht ein Bandbreitenarbeitsbereich einer signalverarbeitende Komponente demjenigen Bandbreitenbereich, in dem die signalverarbeitende Komponente zum Betrieb vorgesehen ist.

In einer weiteren bevorzugten Ausführungsform weist das Teilermodul und/oder das Vervielfachungsmodul eine Oszillatorkomponente zur Erzeugung eines Konversionssignals mit einer Konversionsfrequenz und eine Mischerkomponente zur Mischung des Konversionssignals mit dem am Teilermodul bzw. Vervielfachungsmodul bereitgestellten Radarsignal auf. Durch die Mischung des Konversionssignals mit dem Radarsignal wird eine zuverlässige und präzise, insbesondere an den Frequenzarbeitsbereich der Teilereinrichtung bzw. des Radarsensors anpassbare, Verminderung bzw. Erhöhung der Frequenz des Radarsignals, insbesondere des an der Teileranordnung bereitgestellten Eingangssignals und/oder des von der wenigstens einen Vervielfachungseinrichtung verarbeiteten, gegebenenfalls modifizierten Arbeitssignals, um den zweiten Faktor ermöglicht. In einer weiteren bevorzugten Ausführungsform liegt der erste Faktor im Bereich 1 bis 10, vorzugsweise im Bereich 1,5 bis 6, insbesondere im Bereich 2 bis 4. Dadurch kann ein vom Radarsensor mit einem Frequenzarbeitsbereich oberhalb von 60 GHz und einem Bandbreitenarbeitsbereich zwischen 10 MHz und 20 GHz, vorzugsweise zwischen 100 MHz und 10 GHz, insbesondere zwischen 250 MHz und 5 GHz ausgesendetes Radarsignal, das vorzugsweise als Eingangssignal an der Teileranordnung mit entsprechender Frequenz und Bandbreite bereitgestellt wird, zuverlässig als Arbeitssignal mit einer demgegenüber reduzierten Frequenz bzw. Bandbreite vom Radarzielemulator verarbeitet bzw. anschließend an den Radarsensor mit einer Frequenz innerhalb dessen Frequenzarbeitsbereich und einer Bandbreite innerhalb dessen Bandbreitenarbeitsbereich übermittelt werden.

Des Weiteren betrifft die Erfindung einen Prüfstand zum Verarbeiten eines Radarsignals, der eine Vorrichtung zum Konvertieren des Radarsignals nach der Erfindung und einen Radarzielemulator aufweist, wobei der Radarzielemulator mit der Teileranordnung und der Vervielfachungsanordnung verschaltet, d.h. signalführend verbunden, und dazu eingerichtet ist, das von der Teileranordnung bereitgestellte Radarsignal, dessen Frequenz und Bandbreite mittels der Teileranordnung wenigstens um den ersten Faktor verringert ist, derart zu verarbeiten, insbesondere mit einer Dopplerverschiebung zu beaufschlagen, zeitlich zu verzögern und/oder zu modulieren, dass das entsprechend verarbeitete Radarsignal wenigstens ein emuliertes Objekt charakterisiert.

Dies ist insbesondere vorteilhaft, da sich durch die Kombination aus einer erfindungsgemäßen Vorrichtung zum Konvertieren eines Radarsignals und dem nachgeschalteten Radarzielemulator Radarsignale vom Radarzielemulator präzise und zuverlässig verarbeiten lassen, die von einem räumlich und zeitlich hochauflösenden Radarsensor bei hohen Frequenzen, etwa oberhalb von 60 GHz, und großen Bandbreiten, etwa oberhalb von 250 MHz, ausgesendet werden, auch wenn solche hohen Frequenzen und solche großen Bandbreiten von konventionellen Radarzielemulatoren nicht oder nur unzureichend verarbeiten werden können. Der sich aus der Kombination ergebende Prüfstand ermöglicht daher auch den Einsatz von konventionelle Radarzielemulatoren, die technisch unkompliziert ausgelegt und in denen günstige elektronische Komponenten verbaut sind, in Verbindung mit speziellen und/oder besonders leistungsfähigen, insbesondere in unüblichen Frequenz- und/oder Bandbreitenbereichen arbeitende Radarsensoren. Mit anderen Worten kann der erfindungsgemäße Prüfstand bereits durch geringe Anpassungen der Teileranordnung und der Vervielfachungsanordnung bzw. der darin enthaltenen signalverarbeitenden Komponenten, insbesondere der Teilereinrichtung und der Vervielfachungseinrichtung, und/oder des Teilermoduls und des Vervielfachungsmoduls, an verschiedene, in unterschiedlichen Fahrzeugen eingesetzte Radarsysteme mit verschiedenen Frequenzarbeitsbereichen und/oder Bandbreitenarbeitsbereichen angepasst werden.

In einer weiteren bevorzugten Ausführungsform ist der Radarzielemulator dazu eingerichtet, das von der Teileranordnung bereitgestellte Radarsignal, dessen Frequenz weniger als 10 GHz, vorzugsweise weniger als 5 GHz, insbesondere weniger als 2,5 GHz, und dessen Bandbreite weniger als 4 GHz, vorzugsweise weniger als 2 GHz, insbesondere weniger als 1 GHz, beträgt, zu verarbeiten. Mit anderen Worten weist der Radarzielemulator vorzugsweise einen Arbeitsfrequenzbereich bei unter 10 GHz und einen Arbeitsbandbreitenbereich bei unter 2 GHz auf. Dadurch kann die Verarbeitung des Radarsignals, insbesondere des Arbeitssignals, zuverlässig ausgeführt werden.

Des Weiteren betrifft die Erfindung ein Verfahren zum Konvertieren eines Radarsignals zur weiteren Verarbeitung in einem Prüfstand mit einem Radarzielemulator, wobei eine Frequenz und eine Bandbreite des Radarsignals in einer Teilereinrichtung um einen ersten Faktor zur weiteren Signalverarbeitung verringert wird, und wobei eine Frequenz und eine Bandbreite des Radarsignals in einer Vervielfachungseinrichtung nach der weiteren Signalverarbeitung um den ersten Faktor erhöht wird.

Die Erfindung wird im Folgenden an Hand von Ausführungsbeispielen, die in den Figuren dargestellt sind, näher erläutert. Darin zeigen wenigstens teilweise schematisch:
- Fig. 1: ein Schaltbild einer Vorrichtung zum Konvertieren eines Radarsignals nach einer bevorzugten Ausführungsform der vorliegenden Erfindung; und
- Fig. 2: ein Schaltbild eines Prüfstands nach einer bevorzugten Ausführungsform der vorliegenden Erfindung.

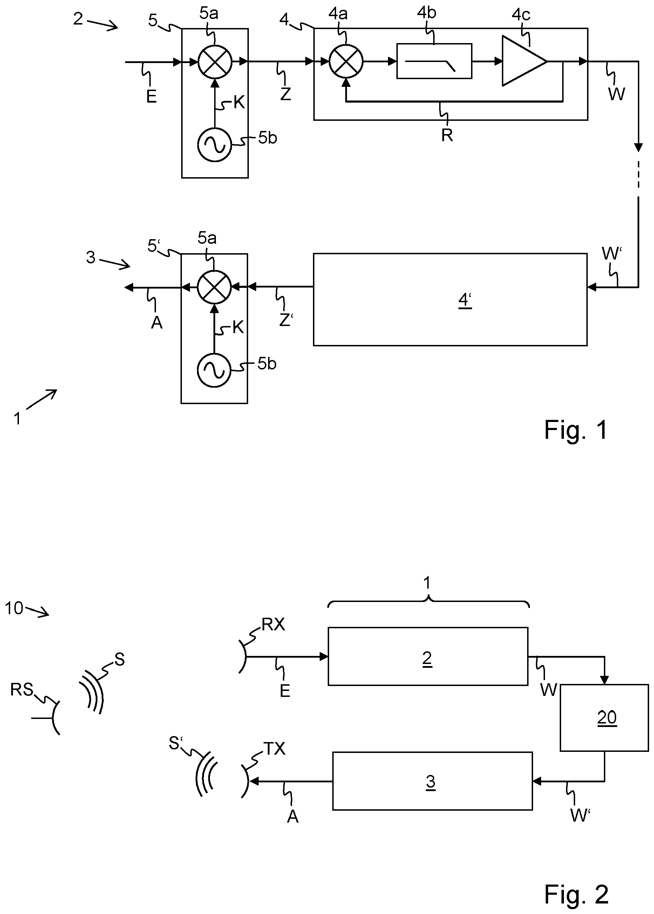

In Fig. 1 ist ein Schaltbild einer Vorrichtung 1 zum Konvertieren eines Radarsignals zur weiteren Signalverarbeitung, insbesondere in einem Prüfstand mit einem Radarzielemulator, in einer bevorzugten Ausführungsform der vorliegenden Erfindung dargestellt. Die Vorrichtung 1 weist eine Teileranordnung 2 und eine Vervielfachungsanordnung 3 auf, in denen vorzugsweise jeweils mehrere signalverarbeitende Komponenten 4, 4', 5, 5' in Signalflussrichtung hintereinander angeordnet und miteinander verschaltet, d.h. signalleitend miteinander verbunden, sind. Die Teileranordnung 2 ist dabei in bevorzugter Weise dazu eingerichtet, ein an der Teileranordnung 2 bereitgestelltes und daher auch als Eingangssignal E bezeichnetes Radarsignal aufzunehmen und als Radarsignal, insbesondere Arbeitssignal W, mit einer gegenüber einer Frequenz und Bandbreite des Eingangssignals E verringerten Frequenz bzw. Bandbreite wieder auszugeben. Das derart ausgegebene Arbeitssignal W kann dann, nach der weiteren Signalverarbeitung, welche durch die gestrichelte Linie angedeutet ist, als verarbeitetes bzw. modifiziertes Arbeitssignal W' von der Vervielfachungsanordnung 3 aufgenommen und als Radarsignal, insbesondere Ausgangssignal A, mit einer gegenüber der Frequenz und Bandbreite des modifizierten Arbeitssignals W' erhöhten Frequenz und Bandbreite wieder ausgeben werden.

Dabei ist vorzugsweise eine Teilereinrichtung 4 innerhalb der Teileranordnung 2 vorgesehen, die dazu eingerichtet ist, das an der Teilereinrichtung 4 anliegende Radarsignal, insbesondere ein Zwischensignal Z, in das Arbeitssignal W umzuwandeln, so dass die Frequenz und die Bandbreite des Arbeitssignals W gegenüber der Frequenz bzw. der Bandbreite des an der Teilereinrichtung 4 anliegenden Zwischensignals Z jeweils um einen ersten Faktor verringert sind. Mit anderen Worten ist die Teilereinrichtung 4 in bevorzugter Weise dazu eingerichtet, die Bandbreite des an der Teilereinrichtung 4 als Zwischensignal Z anliegenden Radarsignals zu komprimieren, so dass das von der Teilereinrichtung 4 als Arbeitssignal W ausgegebene Radarsignal eine gegenüber der Bandbreite des Eingangssignals E um den ersten Faktor verringerte Bandbreite aufweist.

Die Teilereinrichtung 4 kann dabei als regenerativer Frequenzteiler ausgebildet sein, der eine Mischerkomponente 4a zum Mischen des am Frequenzteiler anliegenden Zwischensignals Z mit einem Rückkopplungssignal R, eine Filterkomponente 4b, insbesondere einen Tiefpassfilter, zum Filtern eines oder mehrerer Frequenzbereiche aus dem von der Mischerkomponente 4a ausgegebenen gemischten Signal und eine Verstärkungskomponente 4c zur Verstärkung des von der Filterkomponente 4b ausgegebenen gefilterten Signals aufweist. Im Betrieb des Frequenzteilers wird ein Teil des von der Mischerkomponente 4a ausgegebenen Signals, insbesondere nach Durchlaufen der Filterkomponente 4b und der Verstärkungskomponente 4c, der Mischerkomponente 4a wieder als Rückkopplungssignal R zugeführt. Dadurch können gezielt Frequenzkomponenten, insbesondere ganzzahlige Frequenzbruchteile, isoliert und verstärkt werden, so dass das im Betrieb des Frequenzteilers von Frequenzteiler ausgegebene Arbeitssignal W gegenüber dem am Frequenzteiler anliegenden Zwischensignal Z eine um den ersten Faktor verringerte Frequenz und um den ersten Faktor verringerte Bandbreite aufweist.

Wenn die Teilereinrichtung 4 in der beschriebenen bevorzugten Weise als analoge Schaltung ausgeführt ist, tritt bei der Komprimierung der Bandbreite des Zwischensignals Z kein Informationsverlust auf.

Da die Filterkomponente 4b der Teilereinrichtung 4 in der Regel nur in einem ausgewählten Frequenzbereich zuverlässig arbeitet, beispielsweise alle Frequenzkomponenten des ihr zugeführten Signals oberhalb eines vorgegebenen Frequenzschwellenwerts, etwa oberhalb von 10 GHz, filtert, kann es notwendig sein, die Frequenz des Eingangssignals E in eine Frequenz umzuwandeln, die innerhalb des ausgewählten Frequenzbereichs der Filterkomponente 4b liegt. Mit anderen Worten muss das Eingangssignal E gegebenenfalls zur Verarbeitung in der Teilereinrichtung 4 vorbereitet, insbesondere in das Zwischensignal Z mit einer reduzierten Frequenz umgewandelt, werden.

Zu diesem Zweck ist im vorliegenden Beispiel ein Teilermodul 5 innerhalb der Teileranordnung 2 vorgesehen, welches dazu eingerichtet ist, die Frequenz des Eingangssignals E um einen zweiten Faktor in der Weise zu verringern, dass die Frequenz des resultierenden, vom Teilermodul 5 ausgegebenen Radarsignals, das auch als Zwischensignal Z bezeichnet wird, im Frequenzarbeitsbereich der Teilereinrichtung 4 liegt, d.h. das Zwischensignal Z von der Teilereinrichtung 4 zuverlässig und präzise verarbeitet werden kann.

Das Teilermodul 5 weist vorzugsweise eine Mischerkomponente 5a zur Mischung des am Teilermodul 5 anliegenden Eingangssignals E mit einem Konversionssignal K und eine Oszillatorkomponente 5b zur Erzeugung des Konversionssignals K auf. Gegebenenfalls kann das Teilermodul 5 auch eine Filterkomponente und eine Verstärkerkomponente (nicht dargestellt) aufweisen, durch die das von der Mischerkomponente 5a ausgegebene gemischte Signal nachbearbeitet werden kann, insbesondere so dass die Frequenz des Zwischensignals Z gegenüber der Frequenz des Eingangssignals E um den zweiten Faktor verringert ist. Bei der Mischung des Eingangssignals E mit dem Konversionssignal K wird nur die Frequenz des Eingangssignals E beeinflusst, nicht jedoch dessen Bandbreite.

Insgesamt kann innerhalb der Teileranordnung 2 also die Frequenz des als Eingangssignal E bereitgestellten Radarsignals um einen Faktor reduziert werden, der sich aus der Multiplikation des ersten Faktors mit dem zweiten Faktor ergibt. Die derart ausgeführte Frequenzänderung kann auch als "Frequenzumsetzung" bezeichnet werden.

Die dabei innerhalb der Teileranordnung 2 ausgeführte Bandbreitenänderung, bei welcher die Bandbreite des Radarsignals um den zweiten Faktor reduziert wird, kann auch als "Bandbreitenkomprimierung" bezeichnet werden kann.

Die Vervielfachungsanordnung 3 ähnelt im Aufbau der Teileranordnung 2. Insbesondere kann die Vervielfachungsanordnung 3 jeweils den signalverarbeitenden Komponenten 4, 5 der Teileranordnung 2 entsprechende, jedoch entgegengesetzt arbeitende signalverarbeitenden Komponenten 4', 5' aufweisen. Statt der Teilereinrichtung 4 kann die Vervielfachungsanordnung 3 etwa eine Vervielfachungseinrichtung 4' aufweisen, die vorzugsweise dazu eingerichtet ist, das an der Vervielfachungseinrichtung 4' anliegende modifizierte Arbeitssignal W' in ein weiteres Zwischensignal Z' umzuwandeln, dessen Frequenz und Bandbreite gegenüber der Frequenz bzw. Bandbreite des modifizierten Arbeitssignals W' um den ersten Faktor erhöht sind. Zudem weist die Teileranordnung 3 statt der Teilerkomponente 5 vorzugsweise eine Vervielfachungskomponente 5' auf, die in bevorzugter Weise dazu eingerichtet ist, das an der Vervielfachungskomponente 5' anliegende weitere Zwischensignal Z' in das Ausgangssignal A umzuwandeln, dessen Frequenz gegenüber der Frequenz des weiteren Zwischensignals Z' um den zweiten Faktor erhöht ist.

Die Vervielfachungseinrichtung 4' ist dazu vorzugsweise als Multiplizierer, insbesondere ein Analogmultiplizierer, ausgebildet.

Entsprechend der Teilerkomponente 5 weist die Vervielfachungskomponente 5' in bevorzugter Weise eine Mischerkomponente 5a zur Mischung des weiteren Zwischensignals Z' mit einem Konversionssignal K auf, das von einer Oszillatorkomponente 5b der Teilerkomponente 5 erzeugt wird. Bei der Mischung des weiteren Zwischensignals Z' mit dem Konversionssignal K wird die Frequenz des weiteren Zwischensignals Z' jedoch um den zweiten Faktor auf die Frequenz des Ausgangssignals A erhöht.

Die signalverarbeitenden Komponenten 4, 4', 5, 5' in der Teileranordnung 2 und der Vervielfachungsanordnung 3 sind vorzugsweise derart aufeinander abgestimmt, dass die Frequenz und Bandbreite des Ausgangssignals A im Wesentlichen der Frequenz bzw. Bandbreite des Eingangssignals E entsprechen. Insbesondere kann die Vervielfachungsanordnung 3, insbesondere die Vervielfachungseinrichtung 4' und das Vervielfachungsmodul 5', dazu eingerichtet sein, die innerhalb der Teileranordnung 2 am als Eingangssignal E bereitgestellten Radarsignal ausgeführte Frequenzänderung und die am bereitgestellten Radarsignal ausgeführte Bandbreitenänderung nach der weiteren Signalverarbeitung, etwa in einem Radarzielemulator, insbesondere am als Arbeitssignal W' bereitgestellten verarbeiteten bzw. modifizierten Radarsignal, im Wesentlichen wieder rückgängig zu machen bzw. zu kompensieren.

Auch wenn im vorliegenden Beispiel nur jeweils eine Teilereinrichtung 4, eine Vervielfachungseinrichtung 4', ein Teilermodul 5 und ein Vervielfachungsmodul 5' gezeigt und beschrieben sind, ist es prinzipiell möglich, mehrere dieser signalverarbeitenden Komponenten 4, 4', 5, 5' in der Teileranordnung 2 bzw. der Vervielfachungsanordnung 3 vorzusehen. Dies ist besonders vorteilhaft, wenn beispielsweise ein einzelnes Teilermodul 5 nicht ausreicht, um die Frequenz des Eingangssignals E auf die Frequenz des Zwischensignals Z zur Verarbeitung durch die Teilereinrichtung 4 zu verringern, und/oder eine einzelne Teilereinrichtung 4 nicht ausreicht, um die Bandbreite des Eingangssignals E auf die Bandbreite des Arbeitssignals A zur weiteren Signalverarbeitung, beispielsweise durch einen Radarzielemulator, zu verringern. Durch die Kombination mehrerer signalverarbeitender Komponenten 4, 4', 5, 5' kann die Funktionalität der Vorrichtung 1 an die Erfordernisse des Radarzielemulators bzw. der einzelnen signalverarbeitenden Komponenten 4, 4', 5, 5' angepasst werden.

Dabei spielt es keine Rolle, in welcher Reihenfolge das Radarsignal von den signalverarbeitenden Komponenten 4, 4', 5, 5' verarbeitet wird, solange die Frequenz und/oder die Bandbreite des an einer signalverarbeitenden Komponente 4, 4', 5, 5' anliegenden Signals im Frequenz- bzw. Bandbreitenarbeitsbereich der entsprechenden Komponente liegt.

Besonders vorteilhaft ist es auch möglich, ein oder mehrere Teilermodule 5 und ein oder mehrere Vervielfachungsmodule 5 derart auszubilden, dass die jeweiligen Mischerkomponenten 5a das an ihnen anliegende Radarsignal mit einem Konversionssignal K einer oder mehrerer gemeinsamer Oszillatorkomponenten 5b mischen. Insbesondere kann somit für jedes Teilermodul 5, in der die Frequenz des anliegenden Radarsignals auf Grundlage des von der Oszillatorkomponente 5b bereitgestellten Konversionssignals K um einen, insbesondere den zweiten, Faktor verringert wird, ein Vervielfachungsmodul 5 vorgesehen sein, in dem die Frequenz des anliegenden Radarsignals auf Grundlage des von derselben Oszillatorkomponente 5b bereitgestellten selben Konversionssignals K um denselben, insbesondere den zweiten, Faktor erhöht wird. Mit anderen Worten kann wenigstens ein Teilermodul 5 und wenigstens ein Vervielfachungsmodul 5' dazu eingerichtet sein, sich gemeinsam eine Oszillatorkomponente 5b zu teilen. Dadurch kann die Frequenz des in der Vervielfachungsanordnung 3 verarbeiteten Radarsignals zuverlässig im selben Maße erhöht werden, wie sie zuvor bei dem in der Teileranordnung 2 verarbeiteten Radarsignal verringert wurde.

Fig. 2 zeigt das Schaltbild eines Prüfstands 10 mit einer Vorrichtung 1 zum Konvertieren eines Radarsignals S zur weiteren Signalverarbeitung in einem Radarzielemulator 20 nach einer bevorzugten Ausführungsform der vorliegenden Erfindung. Der Prüfstand 10 weist eine Empfangseinrichtung RX zum Empfangen eines von einem, beispielsweise in einem Kraftfahrzeug verbauten, Radarsensor RS ausgesendeten Radarsignals S, und eine Sendeeinrichtung TX zum Senden des verarbeiteten Radarsignals S' zurück an den Radarsensor RS auf. Der Radarsensor RS weist dabei einen Frequenzarbeitsbereich und einen Bandbreitenarbeitsbereich auf, innerhalb deren er Radarsignale S, S' aussenden bzw. empfangen kann.

Der Radarzielemulator 20 ist vorzugsweise dazu eingerichtet, ein Test-Szenario zu emulieren, d.h. ein oder mehrere Radarziele, insbesondere eine Verkehrssituation, zu emulieren und ein an ihm anliegendes Arbeitssignal W derart verarbeiten, insbesondere mit einer Dopplerverschiebung zu beaufschlagen, zeitlich zu verzögern und/oder zu modulieren, dass das verarbeitete und vom Radarzielemulator 20 ausgegebene Arbeitssignal W', das gelegentlich auch als modifiziertes Arbeitssignal bezeichnet wird, Information bezüglich des emulierten Test-Szenarios enthält. Dabei arbeitet der Radarzielemulator 20 in einem vom Frequenzarbeitsbereich und Bandbreitenarbeitsbereich des Radarsensors RS verschiedenen Frequenzarbeitsbereich bzw. Bandbreitenarbeitsbereich, so dass eine Konversion des von der Empfangseinrichtung RX empfangenen Radarsignals S in das Arbeitssignal W notwendig ist.

Zu diesem Zweck ist die Vorrichtung 1 der Empfangseinrichtung RX und dem Radarzielemulator 20 zwischengeschaltet und weist eine Teileranordnung 2 auf, mittels der das als Eingangssignal E an der Teileranordnung 2 bereitgestellte Radarsignal S in das Arbeitssignal W umgewandelt werden kann. Wie im Zusammenhang mit Figur 1 beschrieben, wird dabei eine Frequenzumsetzung und eine Bandbreitenkomprimierung ausgeführt, bei der die Frequenz des Eingangssignals E um einen Faktor, der sich aus der Multiplikation eines ersten Faktors mit einem zweiten Faktor ergibt, bzw. die Bandbreite des Eingangssignals E um den ersten Faktor, reduziert wird.

Um das vom Radarzielemulator 20 verarbeitete und ausgegebene Arbeitssignal W' wieder an den Radarsensor S übermitteln können, ist entsprechend eine entgegengesetzte Konversion des verarbeiteten und ausgegebenen Arbeitssignals W' in ein Ausgangssignal A notwendig. Mittels einer Vervielfachungsanordnung 3 der Vorrichtung 1, die dem Radarzielemulator 10 und der Sendeeinrichtung TX zwischengeschaltet ist, kann die im Rahmen der Frequenzumsetzung und Bandbreitenkomprimierung reduzierte Frequenz und Bandbreite des verarbeiteten und ausgegebenen Arbeitssignals W' wieder erhöht werden, so dass sie im Wesentlichen der Frequenz bzw. Bandbreite des vom Radarsensor RS ursprünglich ausgesendeten Radarsignals S entspricht. Das Ausgangssignal A kann dann von der Sendeeinrichtung TX als verarbeitetes Radarsignal S' zurück an den Radarsensors RS gesendet und die darin enthaltene Information bezüglich des emulierten Test-Szenarios, beispielsweise von einem Fahrerassistenzsystem bzw. einer Fahrzeugfunktion des den Radarsensor RS aufweisenden Fahrzeugs, zum Testen des Fahrerassistenzsystems bzw. der Fahrzeugfunktion verwendet werden.

### Bezugszeichenliste:

- 1: Vorrichtung zum Konvertieren eines Radarsignals
- 2: Teileranordnung
- 3: Vervielfachungsanordnung
- 4: Teilereinrichtung
- 4a: Mischerkomponente
- 4b: Filterkomponente
- 4c: Verstärkerkomponente
- 4': Vervielfachungseinrichtung
- 5: Teilermodul
- 5a: Mischerkomponente
- 5b: Oszillatorkomponente
- 5': Vervielfachungsmodul
- 10: Prüfstand
- 20: Radarzielemulator

- E: Eingangssignal
- A: Ausgangssignal
- Z: Zwischensignal
- Z': weiteres Zwischensignal
- W: Arbeitssignal
- W': verarbeitetes Arbeitssignal
- S: Radarsignal
- S': verarbeitetes Radarsignal
- K: Konversionssignal

- RS: Radarsensor
- RX: Empfangseinheit
- TX: Sendeeinheit

## Patentansprüche

1. Vorrichtung (1) zum Konvertieren eines Radarsignals (S) zur weiteren Signalverarbeitung in einem Prüfstand (10) mit einem Radarzielemulator (20), aufweisend
eine Teileranordnung (2) mit einer Teilereinrichtung (4), welche dazu eingerichtet ist, eine Frequenz und eine Bandbreite des Radarsignals (S) um einen ersten Faktor zur weiteren Signalverarbeitung zu verringern, und
eine Vervielfachungsanordnung (3) mit einer Vervielfachungseinrichtung (4'), welche dazu eingerichtet ist, eine Frequenz und eine Bandbreite des Radarsignals (S) nach der weiteren Signalverarbeitung um den ersten Faktor zu erhöhen.

2. Vorrichtung (1) nach Anspruch 1, wobei die Teilereinrichtung (4) wenigstens einen, insbesondere regenerativen, Frequenzteiler aufweist.

3. Vorrichtung (1) nach einem der Ansprüche 1 bis 2, wobei
die Teileranordnung (2) des Weiteren ein Teilermodul (5) aufweist, welches dazu eingerichtet ist, eine Frequenz des Radarsignals (S) um einen zweiten Faktor zur weiteren Signalverarbeitung zu verringern, und wobei
die Vervielfachungsanordnung (3) des Weiteren ein Vervielfachungsmodul (5') aufweist, welches dazu eingerichtet ist, eine Frequenz des Radarsignals (S) nach der weiteren Signalverarbeitung um den zweiten Faktor zu erhöhen.

4. Vorrichtung (1) nach Anspruch 3, wobei das Teilermodul (5) und/oder das Vervielfachungsmodul (5') eine Oszillatorkomponente (5b) zur Erzeugung eines Konversionssignals (K) mit einer Konversionsfrequenz und eine Mischerkomponente (5a) zur Mischung des Konversionssignals (K) mit dem am Teilermodul (5) bzw. Vervielfachungsmodul (5') bereitgestellten Radarsignal (S) aufweist.

5. Vorrichtung (1) nach einem der Ansprüche 1 bis 4, wobei der erste Faktor im Bereich 1 bis 10, vorzugsweise im Bereich 1,5 bis 6, insbesondere im Bereich 2 bis 4 liegt.

6. Prüfstand (10), eingerichtet zum Verarbeiten eines Radarsignals (S), aufweisend:
eine Vorrichtung (1) zum Konvertieren des Radarsignals (S) nach einem der Ansprüche 1 bis 5; und
einen Radarzielemulator (20), welcher mit der Teileranordnung (2) und der Vervielfachungsanordnung (3) verschaltet und dazu eingerichtet ist, das von der Teileranordnung (2) bereitgestellte Radarsignal (S), dessen Frequenz und Bandbreite mittels der Teileranordnung (2) wenigstens um den ersten Faktor verringert ist, derart zu verarbeiten, insbesondere mit einer Dopplerverschiebung zu beaufschlagen, zeitlich zu verzögern und/oder zu modulieren, dass das entsprechend verarbeitete Radarsignal (S) wenigstens ein emuliertes Objekt charakterisiert.

7. Prüfstand (10) nach Anspruch 6, wobei der Radarzielemulator (20) dazu eingerichtet ist, das von der Teileranordnung (2) bereitgestellte Radarsignal (S), dessen Frequenz weniger als 10 GHz, vorzugsweise weniger als 5 GHz, insbesondere weniger als 2,5 GHz, und dessen Bandbreite weniger als 4 GHz, vorzugsweise weniger als 2 GHz, insbesondere weniger als 1 GHz, beträgt, zu verarbeiten.

8. Verfahren zum Konvertieren eines Radarsignals (S) zur weiteren Verarbeitung in
einem Prüfstand (10) mit einem Radarzielemulator (20), wobei
eine Frequenz und eine Bandbreite des Radarsignals (S) in einer Teilereinrichtung (2) um einen ersten Faktor zur weiteren Signalverarbeitung verringert wird, und
wobei
eine Frequenz und eine Bandbreite des Radarsignals (S) in einer Vervielfachungseinrichtung (4') nach der weiteren Signalverarbeitung um den ersten Faktor erhöht wird.

## Claims

1. Device (1) for converting a radar signal (S) for further signal processing in a test stand (10) with a radar target emulator (20), comprising
a divider arrangement (2) comprising divider means (4) arranged to reduce a frequency and a bandwidth of the radar signal (S) by a first factor for further signal processing, and
a multiplication arrangement (3) having a multiplication device (4') which is arranged to increase a frequency and a bandwidth of the radar signal (S) by the first factor after the further signal processing.

2. Device (1) according to claim 1, wherein the divider device (4) comprises at least one, in particular regenerative, frequency divider.

3. Device (1) according to any one of claims 1 to 2, wherein
the divider arrangement (2) further comprises a divider module (5) which is arranged to reduce a frequency of the radar signal (S) by a second factor for further signal processing, and wherein
the multiplication arrangement (3) further comprises a multiplier module (5') which is arranged to increase a frequency of the radar signal (S) by the second factor after the further signal processing.

4. Device (1) according to claim 3, wherein the divider module (5) and/or the multiplier module (5') has an oscillator component (5b) for generating a conversion signal (K) with a conversion frequency and a mixer component (5a) for mixing the conversion signal (K) with the radar signal (S) provided at the divider module (5) or multiplier module (5').

5. Device (1) according to any one of claims 1 to 4, wherein the first factor is in the range 1 to 10, preferably in the range 1,5 to 6, in particular in the range 2 to 4.

6. Test bench (10) arranged to process a radar signal (S), comprising:
a device (1) for converting the radar signal (S) according to any one of claims 1 to 5; and
a radar target emulator (20) which is connected to the divider arrangement (2) and the multiplier arrangement (3) and is set up to process the radar signal (S) which is provided by the divider arrangement (2) and whose frequency and bandwidth are reduced by at least the first factor by means of the divider arrangement (2), in particular to apply a Doppler shift, to delay it in time and/or to modulate it in such a way that the correspondingly processed radar signal (S) characterizes at least one emulated object.

7. Test bench (10) according to claim 6, wherein the radar target emulator (20) is arranged to process the radar signal (S) provided by the divider arrangement (2), the frequency of which is less than 10 GHz, preferably less than 5 GHz, in particular less than 2.5 GHz, and the bandwidth of which is less than 4 GHz, preferably less than 2 GHz, in particular less than 1 GHz.

8. Method for converting a radar signal (S) for further processing in a test bench (10) with a radar target emulator (20), wherein
a frequency and a bandwidth of the radar signal (S) in a divider means (2) is reduced by a first factor for further signal processing, and wherein
a frequency and a bandwidth of the radar signal (S) in a multiplier (4') are increased by the first factor after the further signal processing.

## Revendications

1. Dispositif (1) de conversion d'un signal radar (S) pour le traitement ultérieur du signal dans un banc d'essai (10) avec un émulateur de cible radar (20), présentant
un ensemble diviseur (2) avec un système diviseur (4), qui est mis au point pour réduire une fréquence et une largeur de bande du signal radar (S) d'un premier facteur pour le traitement ultérieur du signal, et
un ensemble de multiplication (3) avec un système de multiplication (4'), qui est mis au point pour augmenter une fréquence et une largeur de bande du signal radar (S) du premier facteur après le traitement ultérieur du signal.

2. Dispositif (1) selon la revendication 1, dans lequel le système diviseur (4) présente au moins un diviseur de fréquence, notamment régénératif.

3. Dispositif (1) selon l'une quelconque des revendications 1 à 2, dans lequel l'ensemble diviseur (2) présente par ailleurs un module diviseur (5), qui est mis au point pour réduire une fréquence du signal radar (S) d'un deuxième facteur pour le traitement ultérieur du signal, et dans lequel
l'ensemble de multiplication (3) présente par ailleurs un module multiplicateur (5'), qui est mis au point pour augmenter une fréquence du signal radar (S) d'un deuxième facteur après le traitement ultérieur du signal.

4. Dispositif (1) selon la revendication 3, dans lequel le module diviseur (5) et/ou le module multiplicateur (5') présentent un composant oscillateur (5b) pour la génération d'un signal de conversion (K) avec une fréquence de conversion et un composant mélangeur (5a) pour le mélange du signal de conversion (K) au signal radar (S) mis à disposition sur le module diviseur (5) ou le module multiplicateur (5').

5. Dispositif (1) selon l'une quelconque des revendications 1 à 4, dans lequel le premier facteur se situe dans la plage 1 à 10, de préférence dans la plage 1,5 à 6, en particulier dans la plage 2 à 4.

6. Banc d'essai (10) mis au point pour le traitement d'un signal radar (S), présentant :
un dispositif (1) de conversion du signal radar (S) selon l'une quelconque des revendications 1 à 5 ; et
un émulateur de cible radar (20), qui est branché avec l'ensemble diviseur (2) et l'ensemble de multiplication (3) et qui est mis au point pour traiter le signal radar (S) mis à disposition par l'ensemble diviseur (2), dont la fréquence et la largeur de bande sont réduites au moins du premier facteur au moyen de l'ensemble diviseur (2), en particulier pour le soumettre à l'action d'un déplacement Doppler, pour le ralentir dans le temps et/ou le moduler de telle manière que le signal radar (S) traité en conséquence caractérise au moins un objet émulé.

7. Banc d'essai (10) selon la revendication 6, dans lequel l'émulateur de cible radar (20) est mis au point pour traiter le signal radar (S) mis à disposition par l'ensemble diviseur (2), dont la fréquence est inférieure à 10 GHz, de préférence inférieure à 5 GHz, et en particulier inférieure à 2,5 GHz et dont la largeur de bande est inférieure à 4 GHz, de préférence inférieure à 2 GHz, et en particulier inférieure à 1 GHz.

8. Procédé de conversion d'un signal radar (S) pour le traitement ultérieur dans un banc d'essai (10) avec un émulateur de cible radar (20), dans lequel une fréquence et une largeur de bande du signal radar (S) sont réduites dans un système diviseur (2) d'un premier facteur pour le traitement ultérieur du signal et dans lequel une fréquence et une largeur de bande du signal radar (S) sont augmentées dans un système de multiplication (4') du premier facteur après le traitement ultérieur du signal.
